# EUROPEAN PATENT APPLICATION

(11) **EP 3 366 443 A1**
(43) Date of publication of application: **29.08.2018**
(21) Application number: 16857206.3
(22) Date of filing: 09.09.2016
(51) Int. Cl.: B28D 1/04, B23D 45/16, B23D 47/00, B23D 47/02, B27B 9/00, B27G 3/00, B27G 19/04, B28D 7/02

(54) **ELECTRIC CUTTING MACHINE PROVIDED WITH DUST CONTROL FUNCTION**

(30) Priority: 24.10.2015 JP 2015221642
(71) Applicant: Nakaya Co., Ltd., Niigata 955-0024 (JP)
(72) Inventor: ETO, Naoya, Sanjyo-shi Niigata 955-0024 (JP)
(74) Representative: Isarpatent
(86) International application number: PCT/JP2016/076580
(87) International publication number: WO 2017/068888

(57) **Abstract**

Provided is an electric cutting machine with a dust control function capable of collecting dust generated during processing concrete or stone materials without deteriorating cutting ability and dust collection ability under various working conditions mounted with a cutting position designation guide of excellent visibility and usability. An electric cutting machine with a dust control function, comprising; an electric cutting machine 3 for driving a rotary blade 2 by a built-in motor; a cover 4 for covering a part of the rotary blade 2; a dust discharge duct 73 leading from inside to the outside of the cover 4; and a base 18 rotatably mounted on the cover 4, a bottom face of the base 18 sliding on a surface of a work material 76 during a cutting operation, wherein a guide 26 is provided on a front-most portion in a cutting direction of the cover in a state of being biased to be kept in parallel to the bottom face of the base 18, the guide being vertically tiltable and having an indicator portion 30 indicating a cutting position of the rotary blade 2.

## Description

### TECHNICAL FIELD

The present invention mainly relates to an electric cutting machine with a dust control function comprising a cover to collect dust generated during cutting concrete or stone materials and the like using a rotary blade.

### BACKGROUND ART

Generally, when cutting concrete or stone materials and the like, an electric cutting machine mounted with a dedicated rotary blade is often used. However, dust scatters in large quantity during the cutting, thereby worsening a field view of work site as well as being potentially harmful to the operator's health.

To improve the above situation, as shown in Patent Document 1, the inventor proposes a configuration in which a part of the rotary blade mounted with an electric cutting machine is covered with a cover, a dust collector is connected with a dust discharge duct leading from an inside to an outside of the cover, and the dust generated during the cutting is collected by suction force of the dust collector.

However, in the above described configuration, it is difficult to grasp a position of the rotary blade because most part of the rotary blade is covered with a cover. Even if the cover is formed of transparent material, the inside of the cover clouds due to the dust generated during the operation and the transparency is remarkably deteriorated, thus it is still difficult to visually confirm the position of the rotary blade.

Therefore, in the above described configuration, an indicator portion which indicates the cutting position of the rotary blade is provided on the tip of the cover to enable to align position of the rotary blade with the cutting position even if the inside of the cover is invisible. However, the indicator portion greatly projects toward a cutting direction, thus, for example, when there is an obstacle such as a step, the indicator portion hits the obstacle first and the cutting cannot be further proceeded.

In order for the cutting limit position to avoid being drawn back, therefore, the front projection length of the indicator portion needs to be limited as short as possible.

In an actual site, however, a cutting (plunge cutting) is often used to cut the work material from above a surface of the work material, not from the edge of the work material.

When the plunge cutting is performed using the above described configuration, the indicator portion as an extreme tip portion first comes in contact with a surface of the work material and the rotary blade descends from above with the abutting line as a rotation support shaft to start the cutting. At this time, if the front projection length of the indicator portion is limited to be short, it is difficult for the operator looking forward from the diagonally back of the cover to see the indicator portion, thus the indicator portion does not fulfil its role.

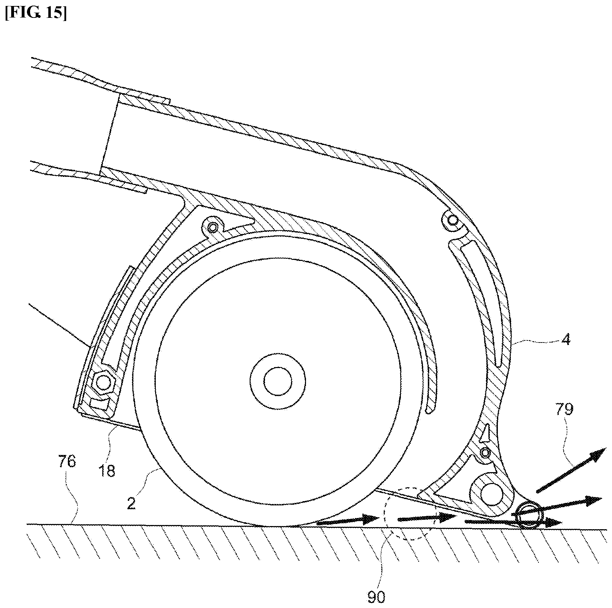

Adversely, if the front projection length of the indicator portion is increased, not only the cutting limit position draws back, but also a dust leak gap 90 generated in front of the rotary blade 2 becomes larger at the time of the plunge cutting as shown in Fig. 15. Thus, a large amount of dust 79 spouting out in front of the rotary blade 2 leaks without being collected inside the cover 4 until a bottom face of the base 18 completely and tightly contacts with the surface of the work material 76.

On the other hand, in the configuration proposed in the Patent Document 2, in order not to leak dust even at the time of plunge cutting, a movable dust guide plate which comes in contact with a work material surface during cutting is provided in front of the rotary blade. However, the above-mentioned problem of the cutting limit position cannot be solved.

Therefore, the present inventor has proposed an electric cutting machine with a dust control function which has a foldable flap indicating the cutting position of the rotary blade on the tip of the cover as shown in Patent Document 3.

In the above described configuration, even if there is an obstacle such as a step in front, the cutting limit position hardly draws back because the flap tilts upward to avoid the obstacle after coming in contact with the obstacle.

Also, in plunge cutting, the flap tilts toward the cover side while abutting with the work material surface, thereby minimizing the dust leak gap generated in front of the rotary blade.
That is, the flap can be extended to improve visibility of the indicator portion even at the time of plunge cutting.

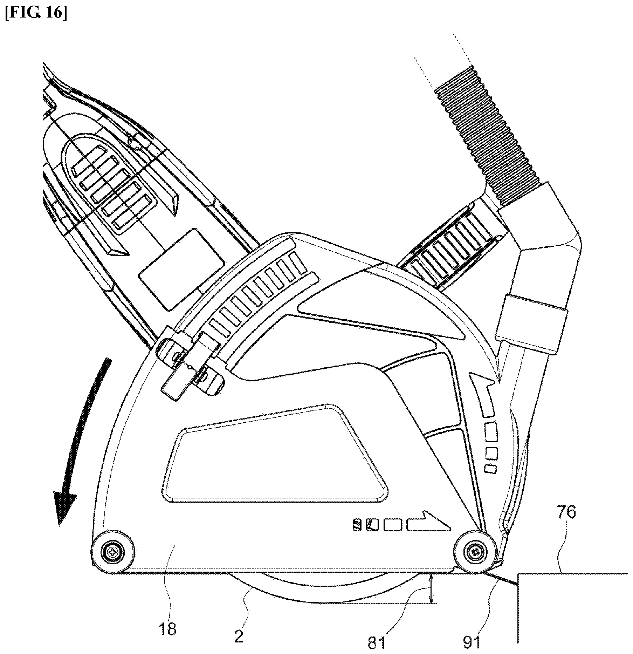

However, in the above described configuration, as shown in Fig. 16, when a cutting depth 81 of the rotary blade 2 is adjusted by rotating the base 18, the flap 91 projects obliquely downward. In such a state, cutting the work material 76 from the edge may cause the flap 91 to hit the edge of the work material 76, which brings hinderance on the operation or a possibility of damaging the flap 91.

### PRIOR ART DOCUMENTS

### Patent Documents

Patent Document 1: Japanese Patent Laid-open Publication No. 2008-307643
Patent Document 2: Japanese Patent No. 5093464
Patent Document 3: Japanese Patent Application No. 2015-134758

### DISCLOSURE OF THE INVENTION

### Problems to be Solved by the Invention

The electric cutting machine with a dust control function suggested in each above-mentioned Patent Documents has an indicator portion indicating the position of the rotary blade, but in any configurations shown in the Patent Document 1 and the Patent Document 2, the more the visibility of the indicator portion is made to be improved, the more the cut limit position draws back when there is an obstacle in front. Also in the configuration shown in the Patent Document 3, there is a possibility that the indicator portion becomes hinderance on the operation depending on cutting conditions.

An object of the present invention is to solve the above-mentioned problems, and realize an electric cutting machine with a dust control function which has not only a cutting position designation guide of excellent visibility and usability but also does not deteriorate cutting ability and dust collection ability under various working conditions.

### Means for Solving the Problem

To achieve the above object, the present invention provides an electric cutting machine with a dust control function comprising; an electric cutting machine 3 for driving a rotary blade 2 by a built-in motor; a cover 4 for covering a part of the rotary blade 2; a dust discharge duct 73 leading from an inside to an outside of the cover 4; and a base 18 which is rotatably mounted on the cover 4, a bottom face of the base 18 sliding on a surface of a work material 76 during a cutting operation, wherein a guide 26 is provided on the front-most portion of the cover 4 in a cutting direction in a state of being biased to be kept in parallel to the bottom face of the base 18, the guide being vertically tiltable and having an indicator portion 30 indicating a cutting position of the rotary blade 2.

Also, the present invention is characterized in that the guide 26 is rotatably supported on a same axis as a rotating motion axis of the base 18.

Further, the present invention is characterized in that the indicator portion 30 is formed in a long slit shape.

Further, the present invention is characterized in that wheels 12, 25, 55, 59, 71 and 72 are rotatably attached on side faces of the cover 4 and the base 18 so that bottom end portions of the wheels slightly project from the bottom face of the base 18.

Further, the present invention is characterized in that an arc-shaped portion 31 smoothly extending upward from the surface of the work material 76 is provided on a tip of the guide 26.

Further, the present invention is characterized in that the indicator portion 30 is provided on the guide 26 as a separate indicator member 88, and the position of the indicator member 88 can be adjusted and moved orthogonally with respect to a cutting direction.

### Effects of the Invention

According to the invention described in claim 1, since the indicator portion 30 of the guide 26 provided on the front-most portion in the cutting direction indicates the cutting position of the rotary blade 2, the operator can accurately cut the work material at the target position even if the inside of the cover 4 is invisible.

Also, the bottom face of the guide 26 is biased to be always kept in parallel to the bottom face of the base 18, thus even when the base 18 is located at any position, the guide 26 can indicate the cutting position of the rotary blade 2 without becoming hinderance at the time of cutting.

Furthermore, since the guide 26 tilts toward the cover 4 even at the time of plunge cutting, it is possible to minimize the dust leak gap 90 generated in the front of the inside of the cover 4 at the time of the plunge cutting and suppress the dust leakage in the forward direction.

According to the invention described in claim 2, the guide 26 is rotatably supported on the rotating motion axis of the base 18, thereby allowing the guide 26 to make its tilt motion to more stable rotating motion without expanding its installation space.

According to the invention described in claim 3, the indicator portion 30 on the guide 26 indicating the cutting position of the rotary blade 2 has a long slit shape, so the cutting target line 78 can be grasped within a certain distance in the long slit shape, therefore, more accurate operation is possible.

According to the invention described in claim 4, by rotatably attaching the wheels 12, 25, 55, 59, 71 and 72 so that the bottom end portion slightly project from the bottom face of the base 18 on the sides of the cover 4 and base 18, it is possible to reduce the frictional resistance occurring between the surface of the work material 76 and the bottom face of the base 18 and decrease the load during operation.

According to the invention described in claim 5, by providing the arc-shaped portion 31 extending upward on the tip of the guide 26, even when cutting is performed toward the obstacle 80 and the tip of the guide 26 reaches the obstacle 80, the guide 26 automatically tilts upward to avoid the obstacle by the action of the arc-shaped portion 31, thereby the operator can proceed cutting to the limit position without applying any special operations.

According to the invention described in claim 6, the position of the indicator member 88 is configured to be adjustable and movable orthogonally with respect to a cutting direction, so even in the case of using the electric cutting machine 3 having different mounting positions of the rotary blade 2, the position of the member 88 can be adjusted according to the electric cutting machine 3 to be used.

### BRIEF DESCRIPTION OF THE DRAWINGS

Fig. 1 is a perspective view of a back face side of an electric cutting machine with a dust control function according to the present invention.
Fig. 2 is a partial sectional view of a bottom face side of an electric cutting machine with a dust control function according to the present invention.
Fig. 3 is a partially exploded perspective view of an electric cutting machine with a dust control function according to the present invention.
Fig. 4 is a partially transparent view of a front face side of the electric cutting machine with a dust control function according to the present invention.
Fig. 5 is a partially exploded perspective view of an electric cutting machine with a dust control function according to the present invention.
Fig. 6 is a partially enlarged view of a front face side of the electric cutting machine with a dust control function according to the present invention.
Fig. 7 is a cross-sectional view taken along the line A-A of Fig. 6.
Fig. 8 is a schematic view showing the state of normal cutting by an electric cutting machine with a dust control function according to the present invention.
Fig. 9 is a schematic view showing the state of normal cutting by an electric cutting machine with a dust control function according to the present invention.
Fig. 10 is a schematic view showing the state of cutting a stepped portion by an electric cutting machine with a dust control function according to the present invention.
Fig. 11 is a perspective view of a bottom side of the electric cutting machine with a dust control function according to the present invention.
Fig. 12 is a schematic view showing the state of shallow incision cutting by an electric cutting machine with a dust control function according to the present invention.
Fig. 13 is a schematic view showing the state of plunge cutting by an electric cutting machine with a dust control function according to the present invention.
Fig. 14 is a partial cross-sectional view of a top side showing another embodiment of the guide portion of an electric cutting machine with a dust control function according to the present invention.
Fig. 15 is a schematic view showing the state of plunge cutting using an electric cutting machine with a dust control function shown in Japanese Patent Laid-open Publication No. 2008-307643.
Fig. 16 is a schematic view showing the state of shallow incision cutting using an electric cutting machine with a dust control function shown in Japanese Patent Application No. 2015-134758.

### MODES FOR CARRYING OUT THE INVENTION

Hereinafter, the basic structure of the embodiment according to the present invention is described.

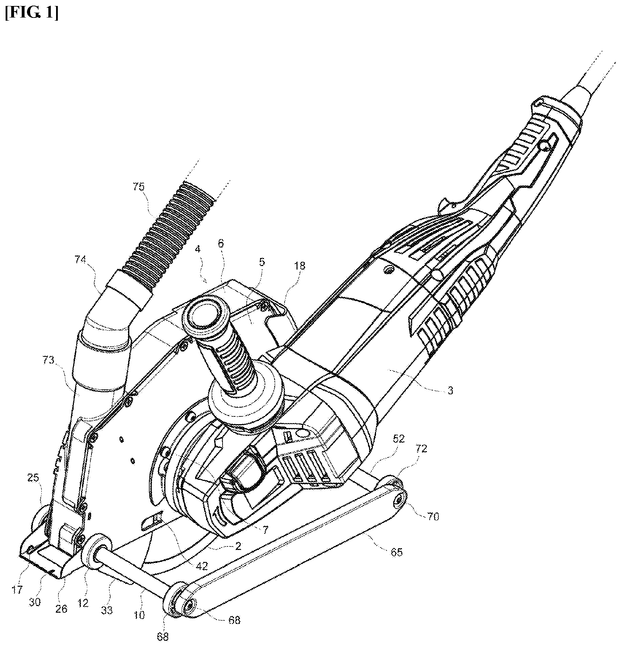

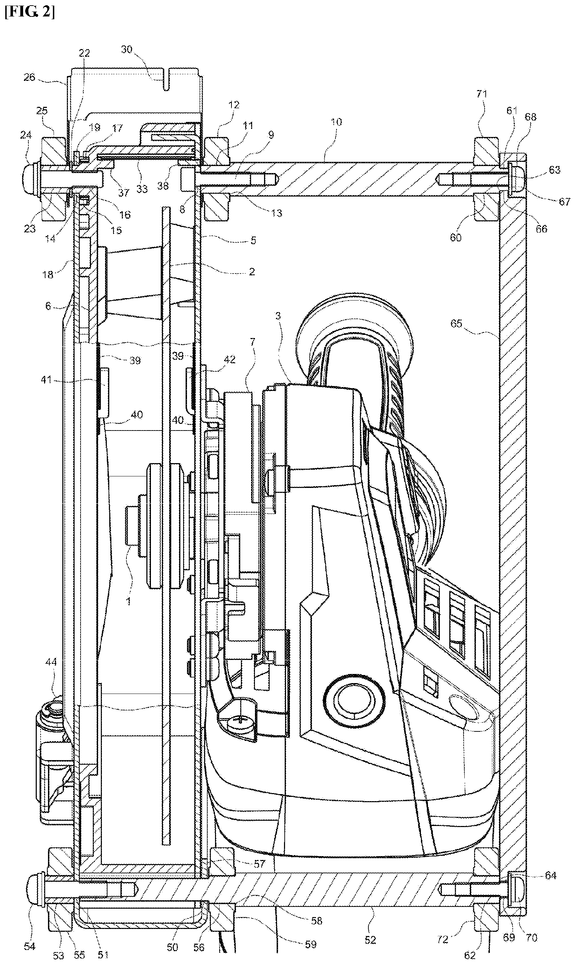

In the electric cutting machine with a dust control function according to the present invention, as shown in Figs. 1 and 2, a cover 4 is attached to an electric cutting machine 3 having the rotary blade 2, an approximately upper half of which covered by the cover 4, attached to a drive shaft 1.

The cover 4 comprises a back face cover 5 made of a steel plate and a front face cover 6 made of resin, and the cover 4 is connected to the electric cutting machine 3 on the back face cover 5 side via an adapter 7.

As to the method of connecting the electric cutting machine 3 and the adapter 7, since various techniques have already been disclosed, detailed structural explanation is omitted here.

In the front side (forward direction in the cutting of the rotary blade 2) of the back face cover 5, a front shaft hole 8 is drilled. A bolt 9 is inserted in the front shaft hole 8 to fasten a front shaft 10 to the back face cover 5.

In the fastening side end face of the front shaft 10, a first stepped shaft 11 of the front side is provided and the first wheel 12 of the front side is rotatably inserted into the first stepped shaft 11 of the front side between the first stepped surface 13 of the front side and the back face cover 5.

On the other hand, in the front side of the front face cover 6, a two-step shaft composed of an upper shaft 14 and a lower shaft 15 is formed on the same axis as the one of the front shaft 10, and a front screw hole 16 of the cover is penetrated in the center of the two-step shaft.

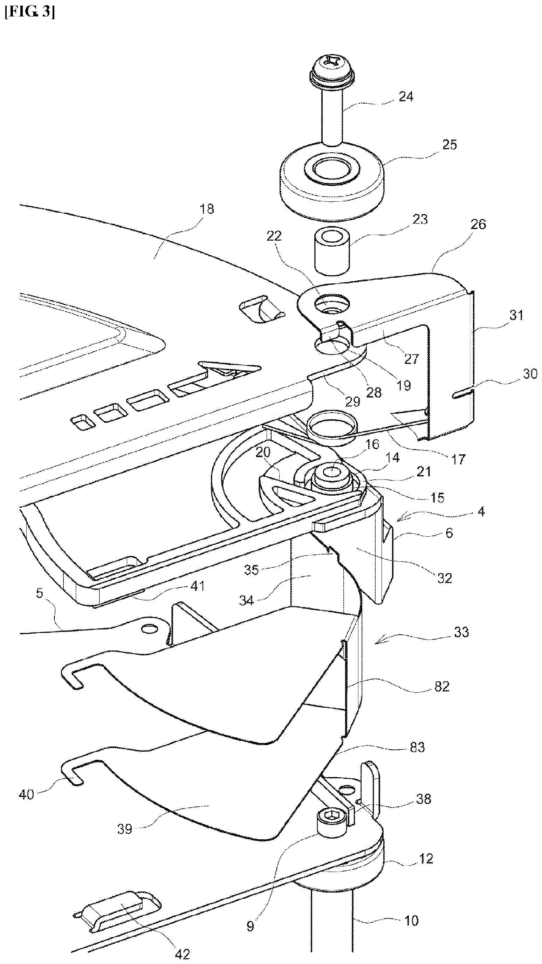

As shown in Fig. 3, a torsion spring 17 is inserted into the lower shaft 15, and a base 18 is rotatably installed on the upper shaft 14 against the front face cover 6 through a shaft hole 19 of the front side of the base. The front end portion of the base is placed in a position that does not project from the front end portion of the front face cover 6.

One end of the torsion spring 17 is engaged with a stopper portion 20 provided on the front face cover 6 and the other end extends to the outside through a passage 21 provided at the front end of the front face cover 6.

On the end face of the upper shaft 14, a washer 22 and a front collar 23 are fastened by tightening a first screw 24 of the front side to the front screw hole 16 of the cover, and the second wheel 25 of the front side is rotatably inserted into the front collar 23 between the washer 22 and the first screw 24 of the front side.

At this time, a guide 26 is rotatably installed over the front collar 23 and the first stepped shaft 11 of the front side.

The guide 26 is sandwiched by the washer 22 and the back face cover 5 from the inside, and by the first wheel 12 of the front side and the second wheel 25 of the front side from the outside, so the guide 26 hardly moves with respect to the rotational axis direction.

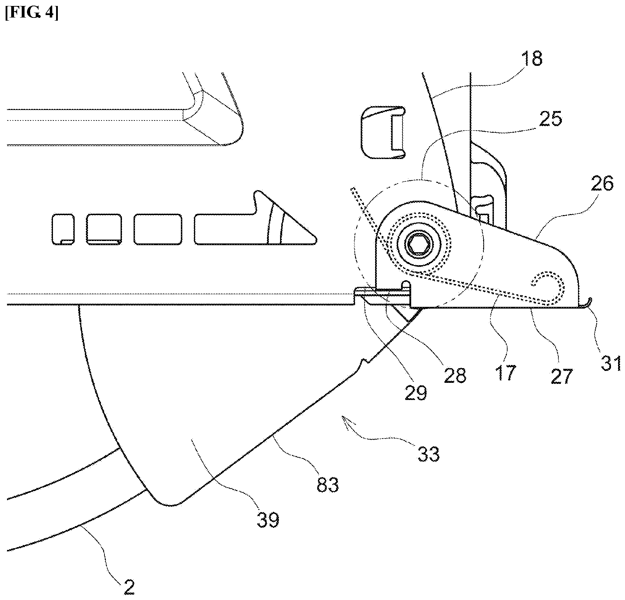

As shown in Fig. 4, one end of the above-mentioned torsion spring 17 on the outer extending side presses a front face portion 27 of the guide, and by the action, a rear face portion 28 of the guide comes into contact with a bottom portion 29 of the side face of the base, and the bottom face portions of the guide 26 and the base 18 are always kept in parallel relation unless external force is applied.

At the front portion of the guide 26, an indicator portion 30 is provided on the extension of the cutting position of the rotary blade 2. On the tip of the front portion, an arc-shaped portion 31 smoothly extending upward from the guide 26 bottom face portion is formed.

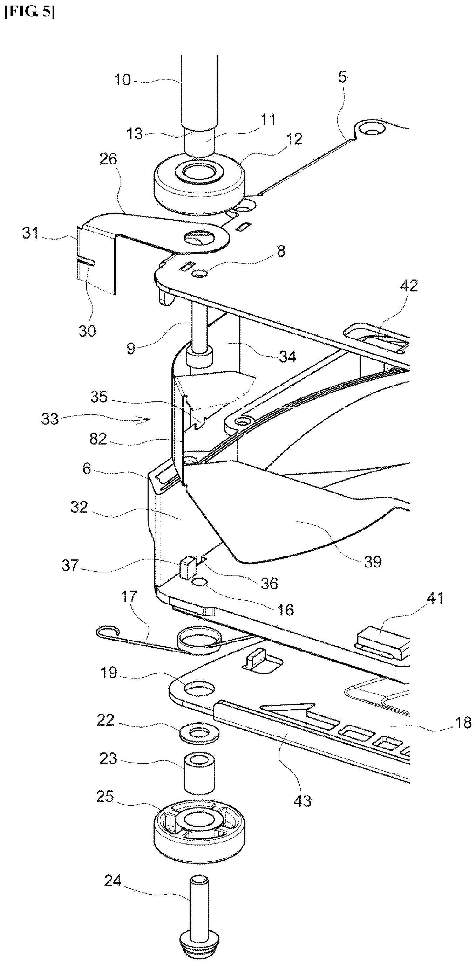

As shown in Fig. 5, a flow guide 33 formed from a plate-like elastic body is attached to an inside front wall 32 of the cover.

The flow guide 33 is sandwiched between the front face cover 6 and the back face cover 5 in a manner to insert a position fixing claw 35 formed in a part of an attachment surface 34 into a position fixing hole 36 provided inside the front face cover 6.

The attachment surface 34 is bent toward the inside of the cover 4 in a state of abutting with a first projection 37 provided inside the front face cover 6 and a second projection 38 provided inside the back face cover 5. Two arms 40 provided on the upper part of fences 39 formed in parallel at both side ends of the attachment surface 34 are latched together with a first hook 41 provided inside of the front face cover 6 and a second hook 42 provided inside of the back face cover 5.

The base 18 described above is formed so as to cover a range from the front face side to a part of the back face side of the cover 4 and the base 18 has a folded portion 43 which is provided on a part of the lower end of the base 18. The folded portion 43 is configured to come in contact with a part of the lower end of the front face cover 6.

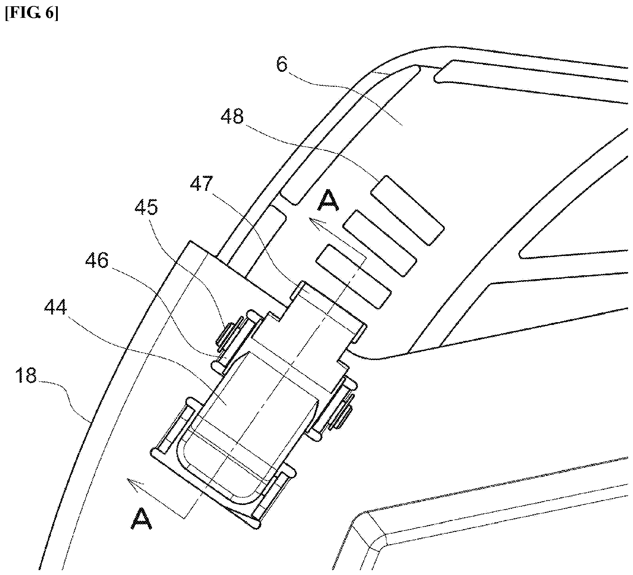

In the rear upper end portion on the front face side of the base 18, as shown in Fig. 6, a lever 44 is rotatably attached on a lever pedestal portion 46 formed in a part of the base 18 via a lever shaft 45. On the tip of the lever 44, a claw portion 47 is formed.

The front face cover 6 has a plurality of slots 48 formed at regular intervals on the orbit of the claw portion 47 which simultaneously rotates when the base 18 rotates with the upper shaft 14 as a support axis.

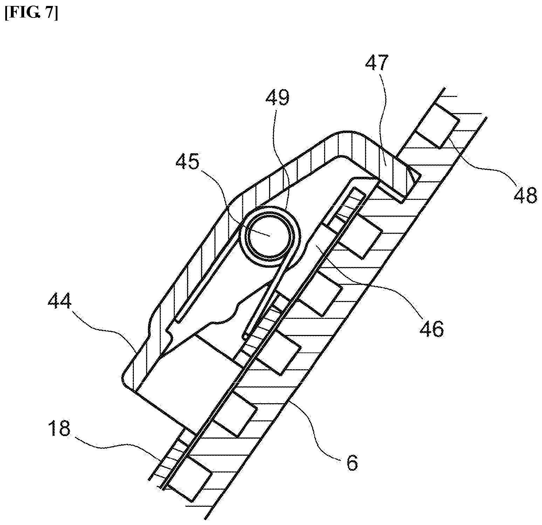

Inside the lever 44, as shown in Fig. 7, a double torsion spring 49 is inserted around the lever shaft 45, and the lever 44 is always urged in a direction to engage the claw portion 47 with one of the slots 48.

In the rear lower end portion of the base 18, a back face side hole 50 and an front face side hole 51 are drilled coaxially, and a rear shaft 52 is inserted from the back side face hole 50. The rear shaft 52 is fastened to the base 18 in a state of abutting with the reverse side of the front face side of the base 18 by tightening a first screw 54 of the rear side through a rear collar 53 from the front face side hole 51.

A first wheel 55 of the rear side is rotatably inserted into the rear collar 53 between the first screw 54 of the rear side and the base 18.

In the intermediate portion of the rear shaft 52, a first stepped shaft 56 of the rear side is formed near a back face portion 57 of the base. A second wheel 59 of the rear side is rotatably inserted into the first stepped shaft 56 of the rear side between the back face portion 57 of the base and a first stepped surface 58 of the rear side.

At the end portion on the electric cutting machine 3 side of the front shaft 10, a second stepped shaft 60 of the front side and a third stepped shaft 61 of the front side are formed, and at the end portion on the electric cutting machine 3 side of the rear shaft 52, a second stepped shaft 62 of the rear side is formed.

A third stepped surface 63 of the front side and an end face 64 of the second stepped shaft of the rear side are located in the same plane, and a sidebar 65 is bridged so as to abut with both the surface and the end face.

In the front side of the sidebar 65, a second screw 68 of the front side is tightened to an end face 67 of the third stepped shaft of the front side in a manner to insert the third stepped shaft 61 of the front side into a front shaft hole 66 of the sidebar. Accordingly, the sidebar 65 is rotatable against the front shaft 10 with the third stepped shaft 61 of the front side as a support shaft.

On the other hand, in the rear side of the sidebar 65, a second screw 70 of the rear side is tightened to the rear shaft 52 from a rear shaft hole 69 of the sidebar. Accordingly, the sidebar 65 is fastened to the rear shaft 52.

A third wheel 71 of the front side and a third wheel 72 of the rear side are rotatably inserted into the second stepped shaft 60 of the front side and the second stepped shaft 62 of the rear side, respectively.

On an upper part of the inside front wall 32 of the cover, a dust discharge duct 73 leading to the outside is formed, and at a tip portion of the dust discharge duct 73, a hose connector 74 is joined.

A hose 75 of a dust collector (not shown) is connected to the hose connector 74, and the hose 75 can turn in arbitrary directions by rotating the hose connector 74.

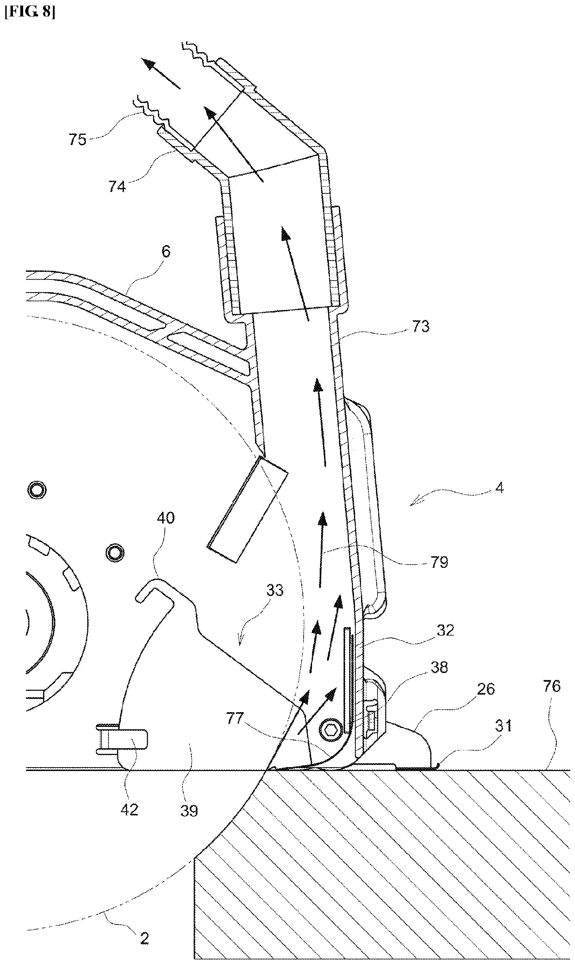

In the case of the normal cutting using the electric cutting machine with a dust collecting function according to the present invention, the electric cutting machine 3 is turned on first to drive the rotary blade 2. Then as shown in Fig. 8, the first wheel 12 of the front side, the second wheel 25 of the front side, and the third wheel 71 of the front side provided in the front side of the cover 4 are made to come in contact with an upper surface of the end portion of the work material 76.

At this time, the flow guide 33 comes in contact with the work material 76, thereby being held inside the cover 4 in a state of being curved so as to wind around the first projection 37 and the second projection 38. As a result, in the front side of the rotary blade 2, a continuous and smooth dust guide passage 77 extending from the contact portion with the work material 76 to the inside of the cover 4 is formed.

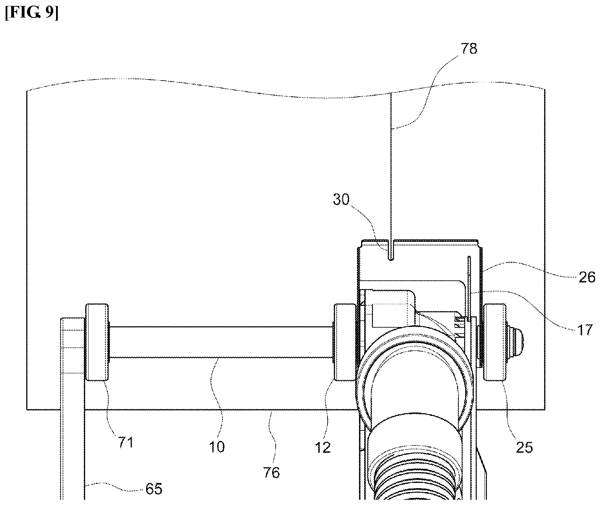

Thereafter, the center position of the indicator portion 30 of the guide 26 is aligned with the cutting target line 78 drawn on the work material 76 as shown in Fig. 9, thereby the cutting position of the rotary blade 2 can align with the position of the cutting target line 78 before cutting.

If the indicator portion 30 is formed in a long slit shape here, the operator can grasp the cutting target line 78 as a line having a constant distance instead of as a point. This allows prevention of a tilt error between the cutting line of the rotary blade 2 and the cutting target line 78.

When the electric cutting machine 3 is pushed forward in the above state, the rotary blade 2 comes in contact with the end portion of the work material 76 in due course. Since the rotary blade 2 is rotationally driven upward, dust 79 ejects from the surface of the work material 76 in the tangential direction of the outer circumference circle of the rotary blade 2.

The ejected dust 79 also receives the action of the rotating wind generated by the rotary blade 2, and flows into the upper dust discharge duct 73 along the dust guide passage 77 formed by the flow guide 33 and the inside front wall 32 of the cover. Then, the dust is collected into a dust collector (not shown) by the suction force of the dust collector through the hose connector 74 and hose 75.

After that, when further pushing forward the electric cutting machine 3, the first wheel 55 of the rear side, the second wheel 59 of the rear side, and the third wheel 72 of the rear side, which are arranged side by side in the rear side of the base 18, ride on the surface of the work material 76 in due course. Thus, a total of six wheels including the front and rear wheels rotates on the surface of the work material 76 by following the cutting. This reduces the frictional resistance occurring between the bottom face of the base 18 and the surface of the work material 76, therefore thrust that must be added to the electric cutting machine 3 during operation can be greatly reduced.

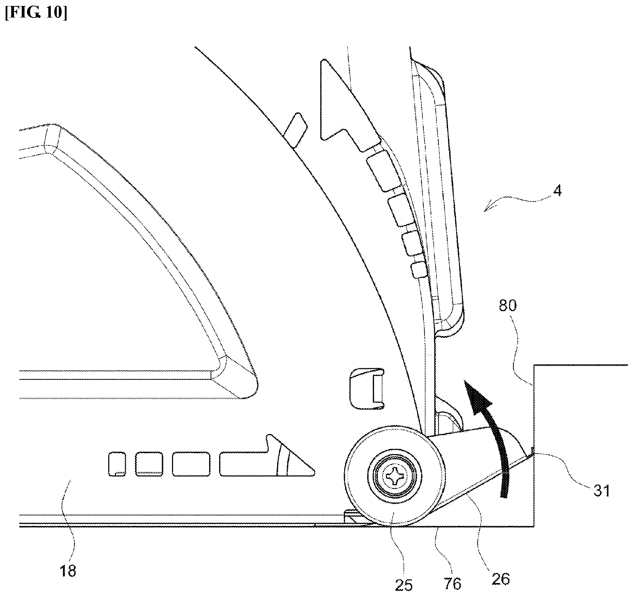

Furthermore, as shown in Fig. 10, even if there is an obstacle such as a step in the cutting direction and the tip of the guide 26 comes in contact with the obstacle 80, the guide 26 rotates upward by the action of the arc-shaped portion 31 provided at the tip of the guide 26. Therefore, the cutting limit position does not draw back due to the guide 26. Also, since the above-described rotating motion of the guide 26 is automatically occurred by use of thrust during the cutting, special operations during the cutting are unnecessary.

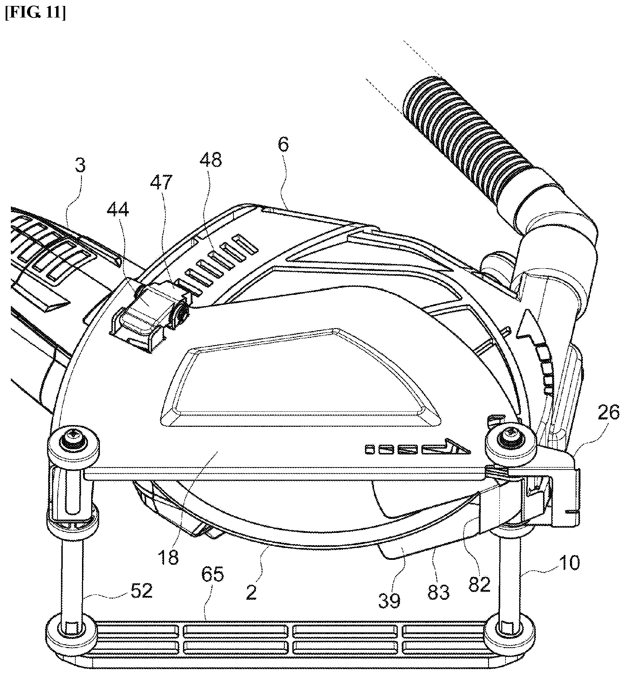

In the electric cutting machine with a dust collecting function according to the present invention, if the engagement between the claw portion 47 and one of the slots 48 is released by pressing the lever 44, the base 18 can rotate downward about the upper shaft 14 as the support shaft as shown in Fig. 11.

At this time, the sidebar 65 indirectly fastened to the base 18 via the rear shaft 52 also rotates with the base 18 about the third stepped shaft 61 of the front side as the support shaft.

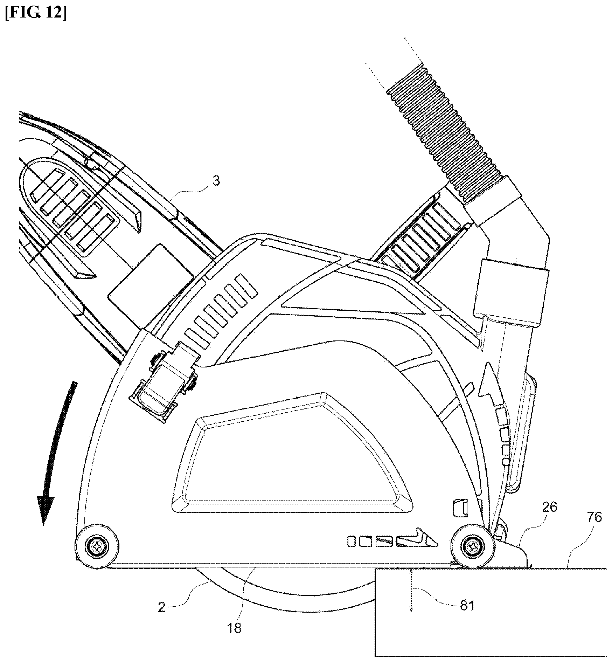

By performing the above-described operation, the operator can adjust the projection length of the rotary blade 2 from the bottom face of the base 18, that is, a cutting depth 81 shown in Fig. 12 at each position where the claw portion 47 and any of the slots 48 are engaged. Even after this adjustment operation is carried out, the guide 26 keeps in parallel to the bottom face of the base 18 by simultaneously rotating with the base 18, so the cutting operation is not hindered by, for example, the tip of the guide 26 of being caught on the end of the work material 76.

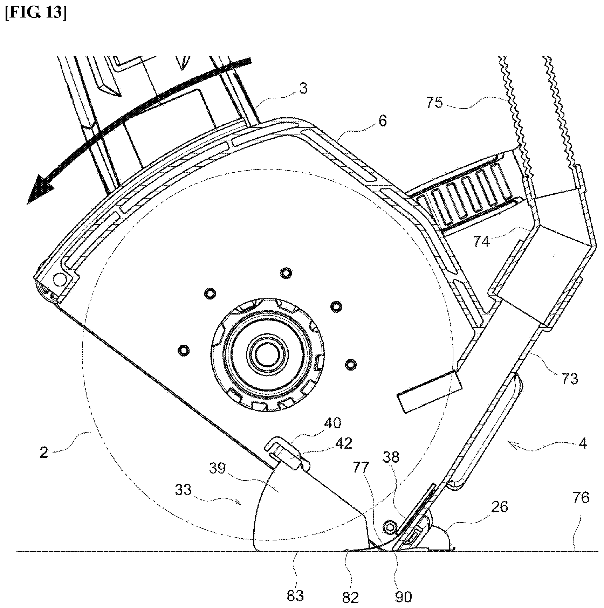

On the other hand, in a case of the plunge cutting using the electric cutting machine with a dust collecting function according to the present invention, after turning on the electric cutting machine 3 to drive the rotary blade 2, as shown in Fig. 13, the first wheel 12 of the front side, the second wheel 25 of the front side, and the third wheel 71 of the front side come in contact with the surface of the work material 76 in a state of inclining the electric cutting machine 3 upward so that the rotary blade 2 does not come in contact with the work material 76.

At this time, since the guide 26 rotates to the cover 4 side by the contact reaction with the work material 76, the dust leak gap 90 generated in front of the inside the cover 4 is minimized regardless of the length of the guide 26 in the front direction.

In addition, since the bottom face of the guide 26 maintains the face-to-face contact state with the surface of the work material 76, the operator can previously align the cutting position of the rotary blade 2 with the position of the cutting target line 78 similarly to the case of the normal cutting.

After adjusting the cutting position of the rotary blade 2 using the guide 26, the electric cutting machine 3 is rotatably moved downward gradually about the rotation shafts of the first wheel 12 of the front side, the second wheel 25 of the front side, and the third wheel 71 of the front side as support shafts.

Then a lower end line portion 82 of the front side of the flow guide first comes into contact with the surface of the work material 76 and forms the dust guide passage 77 extending from the contact portion with the work material 76 to the inside of the cover 4 as described above. Almost at the same time, a lower end line portion 83 of the fence at both side ends of the flow guide 33 come in contact with the surface of the work material 76. As a result, the front portion and both front side faces of the rotary blade 2 are covered by the flow guide 33.

Thereafter, as the electric cutting machine 3 further rotates downward, the rotary blade 2 comes in contact with the work material 76 in due course, and dust blows substantially forward along the tangential direction of the outer circumference of the rotary blade 2. Due to the guide passage 77 formed by the flow guide 33 and side covering effect of the fence 39, most of the dust is more adequately guided to the inside of the cover 4 without straying out of its way, and the dust is gathered inside the dust collector similarly to the case of the normal cutting.

In both operation methods of the normal cutting and the plunge cutting, when the cover 4 is moved off from the work material 76, the guide 26 returns to the original position by the bias force of the torsion spring 17 and the flow guide 33 also returns to the original position by its own elastic force.

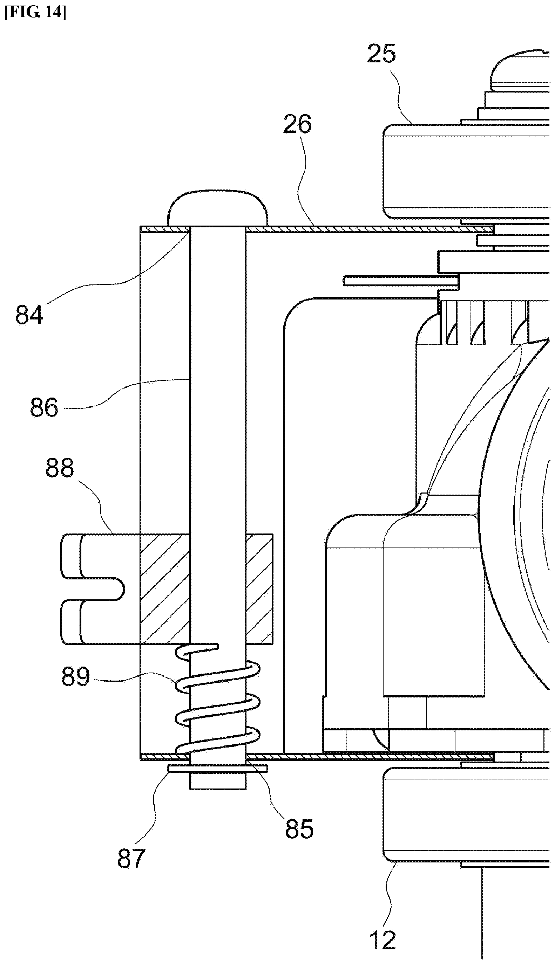

Besides, Fig. 14 shows a configuration in which the position of the indicator portion of the guide 26 is adjustable.

In this configuration, a first passage hole 84 and a second passage hole 85 are coaxially provided on both side wall portions of the tip of the guide 26, and a special screw 86 is inserted through these holes. The special screw 86 has a circlip 87 mounted at the rear end portion thereof so as not to move in its axial direction. To a male screw portion of the special screw 86, an indicator member 88 having a same-sized female screw hole is fitted and by rotating the special screw 86, the indicator member 88 can be freely moved within the range of the male screw portion of the special screw 86.

Further, the position of the indicator member 88 hardly shifts by the unintentional rotation of the special screw 86 due to vibration or the like, since a spring 89 is inserted between the indicator member 88 and the side wall of the guide 26 to always press the side of the indicator member 88.

In the electric cutting machine with a dust control function including the above configuration, even when using the electric cutting machine with the different mounting position of the rotary blade 2, it becomes possible to obtain a similar advantages of the present invention, as described above, by adjusting the position of the indicator member 88.

### Description of the Reference Numerals

1 drive shaft
2 rotary blade
3 electric cutting machine
4 cover
5 back face cover
6 front face cover
7 adapter
8 front shaft hole
9 bolt
10 front shaft
11 first stepped shaft of front side
12 first wheel of front side
13 first stepped surface of front side
14 upper shaft
15 lower shaft
16 front screw hole of cover
17 torsion spring
18 base
19 shaft hole of front side of base
20 stopper portion
21 passage
22 washer
23 front collar
24 first screw of front side
25 second wheel of front side
26 guide
27 front face portion of guide
28 rear face portion of guide
29 bottom portion of side face of base
30 indicator portion
31 arc-shaped portion
32 inside front wall of cover
33 flow guide
34 attachment surface
35 position fixing claw
36 position fixing hole
37 first projection
38 second projection
39 fence
40 arm
41 first hook
42 second hook
43 folded portion
44 lever
45 lever shaft
46 lever pedestal portion
47 claw portion
48 slot
49 double torsion spring
50 back face hole
51 front face side hole
52 rear shaft
53 rear collar
54 first screw of rear side
55 first wheel of rear side
56 first stepped shaft of rear side
57 back face portion of base
58 first stepped surface of rear side
59 second wheel of rear side
60 second stepped shaft of front side
61 third stepped shaft of front side
62 second stepped shaft of rear side
63 third stepped surface of front side
64 end face of second stepped shaft of rear side
65 sidebar
66 front shaft hole of sidebar
67 end face of third stepped shaft of front side
68 second screw of front side
69 rear shaft hole of sidebar
70 second screw of rear side
71 third wheel of front side
72 third wheel of rear side
73 dust discharge duct
74 hose connector
75 hose
76 work material
77 dust guide passage
78 cutting target line
79 dust
80 obstacle
81 cutting depth
82 lower end line portion of front side of flow guide
83 lower end line portion of fence
84 first passage hole
85 second passage hole
86 special screw
87 circlip
88 indicator member
89 spring
90 dust leak gap
91 flap

## Claims

1. An electric cutting machine with a dust control function comprising:
an electric cutting machine for driving a rotary blade by a built-in motor;
a cover for covering a part of the rotary blade;
a dust discharge duct leading from an inside to an outside of the cover; and
a base rotatably mounted on the cover, a bottom face of the base sliding on a surface of a work material during a cutting operation, **characterized in that**
the front end portion of the base is placed in a position that does not project from the front end portion of the cover, and
a guide is provided on the front end portion of the base in a state of being biased to be kept in parallel to the bottom face of the base, the guide being vertically tiltable and having an indicator portion indicating a cutting position of the rotary blade.

2. The electric cutting machine with a dust control function according to claim 1, **characterized in that**
the guide is rotatably supported on a same axis as a rotating motion axis of the base.

3. The electric cutting machine with a dust control function according to claim 1 or 2, **characterized in that**
the indicator portion is formed in a long slit shape.

4. The electric cutting machine with a dust control function according to any one of claims 1 to 3, **characterized in that**
a wheel is rotatably attached on side faces of the cover and the base so that a lower end portion of the wheel slightly projects from the bottom face of the base.

5. The electric cutting machine with a dust control function according to any one of claims 1 to 4, **characterized in that**
an arc-shaped portion smoothly extending upward from the surface of the work material is provided on a tip of the guide.

6. The electric cutting machine with a dust control function according to any one of claims 1 to 5, **characterized in that**
the indicator portion is provided on the guide as a separate indicator member, and
a position of the indicator member can be adjusted and moved orthogonally with respect to a cutting direction.
